# EUROPÄISCHE PATENTSCHRIFT

(11) **EP 3 637 560 B1**
(45) Veröffentlichungstag und Bekanntmachung des Hinweises auf die Patenterteilung: **28.10.2020**
(21) Anmeldenummer: 19198565.4
(22) Anmeldetag: 20.09.2019
(51) Int. Cl.: H01R 13/506, H01R 13/516, B60L 53/16, H01R 13/74, H01R 13/514

(54) **STECKVERBINDERTEIL MIT EINEM MIT EINEM GEHÄUSETEIL ZU VERBINDENDEN INLETTEIL**
CONNECTOR PART COMPRISING AN INLET PART TO BE CONNECTED TO A HOUSING PART
PARTIE DE CONNECTEUR ENFICHABLE DOTÉE D'UNE PARTIE D'ENTRÉE À RACCORDER À UNE PARTIE DE BOITIER

(30) Priorität: 09.10.2018 DE 102018124821
(43) Veröffentlichungstag der Anmeldung: 15.04.2020
(73) Patentinhaber: Phoenix Contact e-Mobility GmbH, 32816 Schieder-Schwalenberg (DE)
(72) Erfinder: GARTH, Carsten, 32657 Lemgo (DE); FELDNER, Ralf, 32805 Horn-Bad Meinberg (DE); SCHLÜTER, Kai, 32676 Lügde (DE)
(74) Vertreter: Muth, Bruno

(56) Entgegenhaltungen:
- DE-B3-102004 018 103
- DE-U1- 9 014 856
- US-A1- 2011 045 701

## Beschreibung

Die Erfindung betrifft ein Steckverbinderteil zum Verbinden mit einem Gegensteckverbinderteil nach dem Oberbegriff des Anspruchs 1.

Ein solches Steckverbinderteil umfasst ein Gehäuseteil und ein mit dem Gehäuseteil zu verbindendes Inletteil, das einen Steckabschnitt aufweist, an dem zumindest ein (elektrisches) Kontaktelement zum steckenden Verbinden mit dem Gegensteckverbinderteil anordbar ist.

Ein solches Steckverbinderteil kann z.B. als Ladestecker oder als Ladebuchse zum Aufladen eines elektrisch angetriebenen Fahrzeugs (auch bezeichnet als Elektrofahrzeug) Verwendung finden. Eine solche Ladebuchse ist beispielswiese an einem Fahrzeug angeordnet und kann steckend mit einem zugeordneten Gegensteckverbinderteil in Form eines Ladesteckers an einem an eine Ladestation angeschlossenen Kabel verbunden werden, um auf diese Weise eine elektrische Verbindung zwischen der Ladestation und dem Fahrzeug herzustellen.

Insbesondere bei auf Seiten eines Fahrzeugs anzuordnenden Ladebuchsen, auch bezeichnet als Inlet, ist üblicherweise vorgesehen, ein von außen sichtbares Gehäuseteil nach Wünschen eines Fahrzeugherstellers für unterschiedliche Fahrzeuge unterschiedlich variabel zu gestalten. Ein Inletteil, das den Steckabschnitt mit daran angeordneten elektrischen Kontaktelementen ausbildet, ist hierbei jedoch üblicherweise mit Blick auf sein Steckgesicht genormt. Weil Gehäuseteile für unterschiedliche Fahrzeuge unterschiedlich gestaltet sind, ist mit bisherigen Ansätzen schwierig möglich, Gleichteile für die Ausbildung des Steckverbinderteils zu verwenden, weil herkömmlich üblicherweise auch das Inletteil zur Befestigung an dem (abhängig vom Fahrzeug variablen) Gehäuseteil angepasst werden muss.

Wie in der WO 2014/053221 A1 beschrieben, können für Kraftfahrzeuge mit Elektroantrieb unterschiedlich konfigurierte Ladeeinrichtungen erforderlich sein. Ein solches Erfordernis ergibt sich beispielsweise aus unterschiedlichen länderspezifischen Standards bezüglich der Ladestationen oder unterschiedlichen Fahrzeugsystemen. Gemäß der in der WO 2014/053221 A1 beschriebenen Technik ist eine Ladeeinrichtung als Modulsystem ausgebildet. Dabei ist ein universell verwendbares mittleres Modul zur Befestigung am Fahrzeug vorgesehen. Dieses mittlere Modul weist sowohl eingangs- als auch ausgangsseitig jeweils eine Schnittstelle zum Anbringen eines aus unterschiedlichen Modulen auswählbaren Endmoduls auf.

Die DE 10 2011 004 834 A1 beschreibt eine Ladeeinrichtung für ein Elektrofahrzeug, bei der eine Adapterplatte vorgesehen ist, um ein genormtes elektrisches Bauteil an verschiedenen Fahrzeugkarosserien anzubringen.

Die DE 10 2004 018103 B3 beschreibt ein Steckverbinderteil gemäß dem Oberbegriff des Anspruchs 1.

Aufgabe der vorliegenden Erfindung ist es, ein Steckverbinderteil und ein Verfahren zum Montieren eines Steckverbinderteils zur Verfügung zu stellen, die die Verwendung eines einheitlichen Inletteils zusammen mit variabel gestalteten, unterschiedlichen Gehäuseteilen ermöglichen und eine Schnittstelle zur Befestigung eines solchen einheitlichen Inletteils an unterschiedlichen Gehäuseteilen bereitstellen.
Diese Aufgabe wird durch einen Gegenstand mit den Merkmalen des Anspruchs 1 gelöst.

Demnach umfasst das Steckverbinderteil einen Verriegelungsrahmen, der zumindest ein erstes Rastelement aufweist. Der Verriegelungsrahmen ist in einer ersten Montagestellung über das zumindest eine erste Rastelement mit dem Inletteil verrastet, um das Inletteil zusammen mit dem Verriegelungsrahmen an das Gehäuseteil anzusetzen. Das Inletteil ist in einer an das Gehäuseteil angesetzten Stellung über zumindest ein zweites Rastelement formschlüssig mit dem Gehäuseteil verbunden. Der Verriegelungsrahmen ist aus der ersten Montagestellung relativ zu dem Inletteil in eine zweiten Montagestellung bewegbar, um in der an das Gehäuseteil angesetzten Stellung des Inletteils derart auf das zumindest eine zweite Rastelement einzuwirken, dass die formschlüssige Verbindung zwischen dem Inletteil und dem Gehäuseteil in der zweiten Montagestellung des Verriegelungsrahmens gegen ein Lösen gesichert ist.
Zum Verbinden des Inletteils mit dem Gehäuseteil wird somit vorgeschlagen, einen Verriegelungsrahmen zu verwenden, der an dem Inletteil angeordnet und relativ zu dem Inletteil bewegbar ist, um das Inletteil zunächst - bei in der ersten Montagestellung befindlichem Verriegelungsrahmen - an das Gehäuseteil ansetzen zu können und sodann eine gesicherte, feste Verbindung zwischen dem Inletteil und dem Gehäuseteil - durch Bewegen des Verriegelungsrahmens aus der ersten Montagestellung in die zweite Montagestellung - herzustellen. Der Verriegelungsrahmen ist an dem Inletteil angeordnet und wird zusammen mit dem Inletteil an das Gehäuseteil angesetzt. Ist das Inletteil an das Gehäuseteil angesetzt worden, wird der Verriegelungsrahmen relativ zu dem Gehäuseteil bewegt, um die formschlüssige Verbindung zwischen dem Inletteil und dem Gehäuseteil zu sichern.

Das Inletteil geht mit dem Gehäuseteil, wenn das Inletteil an das Gehäuseteil angesetzt ist, eine formschlüssige Verbindung ein. Diese formschlüssige Verbindung wird über zumindest ein zweites, elastisch auslenkbares Rastelement hergestellt, das bei Ansetzen des Inletteils an das Gehäuseteil so verrastet, dass das Inletteil formschlüssig mit dem Gehäuseteil verbunden wird. Befindet sich der Verriegelungsrahmen in der ersten Montagestellung an dem Inletteil, ist eine solche elastische Auslenkung des zumindest einen zweiten Rastelements möglich, sodass durch Ansetzen des Inletteils die formschlüssige Verbindung zwischen dem Inletteil und dem Gehäuseteil hergestellt werden kann.

Ist das Inletteil an das Gehäuseteil angesetzt worden und wird der Verriegelungsrahmen aus seiner ersten Montagestellung in die zweite Montagestellung relativ zu dem Inletteil bewegt, so gerät der Verriegelungsrahmen derart mit dem zumindest einen zweiten Rastelement in Wechselwirkung, dass eine elastische Auslenkung des zweiten Rastelements gesperrt ist. Die formschlüssige Verbindung zwischen dem Inletteil und dem Gehäuseteil ist somit gesichert, weil das zumindest eine zweite Rastelement in seiner eingenommenen Stellung über den Verriegelungsrahmen blockiert ist.

In einer Ausgestaltung weist der Verriegelungsrahmen ein Körperelement auf, an dem das zumindest eine erste Rastelement angeordnet ist und das sich zumindest abschnittsweise umfänglich um das Inletteil erstreckt. Das Körperelement fasst das Inletteil somit zumindest teilweise umfänglich ein und trägt ein oder mehrere erste Rastelemente, über die der Verriegelungsrahmen in der ersten Montagestellung mit dem Inletteil verrastet ist. In der ersten Montagestellung ist der Verriegelungsrahmen somit an dem Inletteil gehalten und kann zusammen mit dem Inletteil an das Gehäuseteil angesetzt werden.

In einer Ausgestaltung ist das Körperelement ausgebildet, in der zweiten Montagestellung des Verriegelungsrahmens auf das zumindest eine zweite Rastelement einzuwirken, um so die formschlüssige Verbindung zwischen dem Inletteil und dem Gehäuseteil zu sichern. Mit dem umfänglich um das Inletteil herum erstreckten Körperelement wirkt der Verriegelungsrahmen somit auf das zumindest eine zweite Rastelement ein, wenn der Verriegelungsrahmen in seine zweite Montagestellung relativ zu mit dem Inletteil bewegt worden ist, sodass eine elastische Auslenkung des zumindest einen zweiten Rastelements gesperrt und die formschlüssige Verbindung zwischen dem Inletteil und dem Gehäuseteil somit gegen ein Lösen gesichert ist.

Das zumindest eine zweite Rastelement kann beispielsweise an dem Gehäuseteil angeordnet sein. Das zumindest eine zweite Rastelement kann beispielsweise von einem Bodenabschnitt des Gehäuseteils nach Art eines Rastfingers erstreckt sein und ist so elastisch auslenkbar, dass bei Ansetzen des Inletteils an das Gehäuseteil eine formschlüssige Verbindung zwischen dem Inletteil und dem Gehäuseteil über das zumindest eine zweite Rastelement hergestellt werden kann.

Hierbei kann vorgesehen sein, dass bei Ansetzen des Inletteils an das Gehäuseteil das zumindest eine zweite Rastelement durch Wechselwirken mit dem Inletteil selbsttätig ausgelenkt wird. Eine gesonderte Betätigung des zumindest einen zweiten Rastelements ist somit nicht erforderlich. Bei Ansetzen des Inletteils an das Gehäuseteil wird das zumindest eine zweite Rastelement ausgelenkt und schnappt, wenn die angesetzte Stellung erreicht ist, in formschlüssigen Eingriff mit dem Inletteil.

Die formschlüssige Verbindung zwischen dem Inletteil und dem Gehäuseteil kann hierbei dadurch hergestellt sein, dass das an dem Gehäuseteil angeordnete, zumindest eine zweite Rastelement bei an das Gehäuseteil angesetztem Inletteil in eine zugeordnete Rasteinrichtung des Inletteils eingreift. Die Rasteinrichtung kann zum Beispiel durch eine Rastausnehmung in Form einer Vertiefung an dem Inletteil gebildet sein, mit der das zumindest eine zweite Rastelement bei an das Gehäuseteil angesetztem Inletteil in Eingriff steht, sodass darüber das Inletteil formschlüssig mit dem Gehäuseteil verbunden ist. In der zweiten Montagestellung wirkt der Verriegelungsrahmen hierbei derart auf das zumindest eine zweite Rastelement ein, dass das zumindest eine zweite Rastelement nicht aus seinem Rasteingriff mit der Rasteinrichtung des Inletteils lösbar ist.

In einer Ausgestaltung ist der Verriegelungsrahmen in eine erste Montagerichtung an das Inletteil ansetzbar, um den Verriegelungsrahmen in der ersten Montagestellung mit dem Inletteil zu verrasten. Zur Montage des Steckverbinderteils wird zunächst somit der Verriegelungsrahmen an das Inletteil angesetzt, wobei dies in eine erste Montagerichtung erfolgt. In die erste Montagerichtung wird der Verriegelungsrahmen beispielsweise mit seinem Körperelement so an das Inletteil angesetzt, dass das Körperelement das Inletteil umfänglich umgreift.

Ist das Inletteil sodann zusammen mit dem Verriegelungsrahmen an das Gehäuseteil angesetzt worden, kann, in einer Ausgestaltung, der Verriegelungsrahmen aus der ersten Montagestellung in eine der ersten Montagerichtung entgegengesetzte, zweite Montagerichtung relativ zu dem Inletteil bewegt werden, um auf diese Weise den Verriegelungsrahmen in die zweite Montagestellung zu überführen. Das Überführen des Verriegelungsrahmens in die zweite Montagestellung erfolgt somit in eine der ersten Montagerichtung entgegengesetzte, zweite Montagerichtung. In der zweiten Montagestellung wirkt der Verriegelungsrahmen dann auf das zumindest eine zweite Rastelement derart ein, dass die formschlüssige Verbindung zwischen dem Inletteil und dem Gehäuseteil gesichert ist und das Inletteil somit nicht ohne weiteres, jedenfalls nicht ohne Betätigung des Verriegelungsrahmens zum Bewegen Verriegelungsrahmens aus der zweiten Montagestellung heraus, von dem Gehäuseteil gelöst werden kann.

In einer Ausgestaltung weist der Verriegelungsrahmen zumindest ein Anschlagelement auf, das in der zweiten Montagestellung in Anlage mit einer Anschlagkontur des Inletteils ist. Das zumindest eine Anschlagelement definiert zusammen mit der Anschlagkontur die zweite Montagestellung derart, dass bei Überführen des Verriegelungsrahmens aus der ersten Montagestellung in Richtung der zweiten Montagestellung das zumindest eine Anschlagelement mit der Anschlagkontur in Anlage gelangt und somit der Verriegelungsrahmen nicht über die zweite Montagestellung hinaus zu dem Inletteil bewegt werden kann. Bei Überführen des Verriegelungsrahmens aus der ersten Montagestellung in die zweite Montagestellung relativ zu dem Inletteil wird das zumindest eine Anschlagelement der Anschlagkontur angenähert und gelangt in die zweite Montagerichtung in Anlage mit der Anschlagkontur, wenn die zweite Montagestellung erreicht ist.

In der ersten Montagestellung ist der Verriegelungsrahmen über das zumindest eine erste Rastelement mit dem Inletteil, vorzugsweise mit einem ersten Rasteingriff des Inletteils in Form einer Rastausnehmung oder dergleichen, verrastet, sodass der Verriegelungsrahmen bei Ansetzen des Inletteils an das Gehäuseteil in Position zu dem Inletteil gehalten wird. Wird der Verriegelungsrahmen sodann, wenn das Inletteil an das Gehäuseteil angesetzt worden ist, aus seiner ersten Montagestellung in die zweite Montagestellung überführt, kann vorteilhafter Weise vorgesehen sein, dass der Verriegelungsrahmen über das zumindest eine erste Rastelement auch in der zweiten Montagestellung mit dem Inletteil verrastet und somit in der zweiten Montagestellung zu dem Inletteil arretiert ist. Hierzu kann das zumindest eine erste Rastelement in der zweiten Montagestellung zum Beispiel rastend mit einem in die zweite Montagerichtung versetzten, zweiten Rasteingriff des Inletteils, zum Beispiel in Form einer Rastausnehmung, in Eingriff stehen, sodass ein Formschluss zwischen dem Verriegelungsrahmen und dem Inletteil auch in der zweiten Montagestellung besteht. Der Verriegelungsrahmen kann somit nicht ohne weiteres, jedenfalls nicht ohne Lösen des Formschlusses, aus der zweiten Montagestellung heraus bewegt werden, sodass der Verriegelungsrahmen nicht ohne weiteres, jedenfalls nicht unbeabsichtigt, betätigt werden kann und die Verbindung zwischen dem Inletteil und dem Gehäuseteil somit zuverlässig gesichert ist.

In einer Ausgestaltung weist das Gehäuseteil eine Aufnahmeöffnung auf, in die das Inletteil zum Verbinden mit dem Gehäuseteil einzusetzen ist. Das Inletteil kann hierbei an einer ersten Seite des Gehäuseteils in die Aufnahmeöffnung einzusetzen sein derart, dass der Steckabschnitt des Inletteils an einer zweiten Seite des Gehäuseteils zugänglich ist und an der zweiten Seite des Gehäuseteils steckend mit einem zugeordneten Gegensteckverbinderteil verbunden werden kann. Die erste Seite kann beispielsweise einer bei bestimmungsgemäßer Verwendung des Gehäuseteils nach innen gewandten Innenseite entsprechen, während die zweite Seite einer von außerhalb zugänglichen Außenseite entspricht. Das Ansetzen des Inletteils an das Gehäuseteil erfolgt somit rückseitig einer Außenseite des Gehäuseteils. Ist das Inletteil an das Gehäuseteil angesetzt worden, ist das durch den Steckabschnitt gebildete Steckgesicht des Inletteils somit von außen zugänglich, sodass ein Gegensteckverbinderteil an das Steckverbinderteil von außen angesetzt werden kann.

Das Steckverbinderteil kann beispielsweise Bestandteil eines Ladesystems zum Aufladen eines Elektrofahrzeugs sein. Das Steckverbinderteil kann hierbei insbesondere eine Ladebuchse auf Seiten eines Fahrzeugs verwirklichen, an die ein zum Beispiel über ein Ladekabel mit einer Ladestation verbundener Ladestecker angesteckt werden kann, um eine elektrische Verbindung zwischen der Ladestation und dem Elektrofahrzeug herzustellen und das Elektrofahrzeug aufzuladen. Das Gehäuseteil kann hierbei variabel gestaltet sein, während das mit dem Gehäuseteil zu verbindende Inletteil als Gleichteil an unterschiedliche Gehäuseteile angesetzt werden kann.

Die Aufgabe wird auch gelöst durch ein Verfahren zum Montieren eines Steckverbinderteils zum Verbinden mit einem Gegensteckverbinderteil, bei dem ein Inletteil, das einen Steckabschnitt aufweist, an dem zumindest ein Kontaktelement zum steckenden Verbinden mit dem Gegensteckverbinderteil anordbar ist, mit einem Gehäuseteil verbunden wird. Dabei ist vorgesehen, dass das Inletteil zusammen mit einem Verriegelungsrahmen, der zumindest ein erstes Rastelement aufweist und in einer ersten Montagestellung über das zumindest eine erste Rastelement mit dem Inletteil verrastet ist, an das Gehäuseteil angesetzt wird derart, dass das Inletteil in einer an das Gehäuseteil angesetzten Stellung über zumindest ein zweites Rastelement formschlüssig mit dem Gehäuseteil verbunden ist. Sodann wird der Verriegelungsrahmen aus der ersten Montagestellung relativ zu dem Inletteil in eine zweite Montagestellung bewegt, sodass der Verriegelungsrahmen in der an das Gehäuseteil angesetzten Stellung des Inletteils derart auf das zumindest eine zweite Rastelement einwirkt, dass die formschlüssige Verbindung zwischen dem Inletteil und dem Gehäuseteil in der zweiten Montagestellung des Verriegelungsrahmens gegen ein Lösen gesichert ist.

Die vorangehend für das Steckverbinderteil beschriebenen Vorteile und vorteilhaften Ausgestaltungen finden analog auch auf das Verfahren Anwendung, sodass diesbezüglich auf das vorangehend Ausgeführte verwiesen werden soll.

Der der Erfindung zugrunde liegende Gedanke soll nachfolgend anhand der in den Figuren dargestellten Ausführungsbeispiele näher erläutert werden. Es zeigen:
- Fig. 1: eine Ansicht einer Ladestation mit einem daran angeordneten Kabel;
- Fig. 2: eine Ansicht eines Steckverbinderteils in Form einer an einem Fahrzeug anzubringenden Ladebuchse;
- Fig. 3: eine Ansicht eines Inletteils eines Steckverbinderteils zusammen mit einem daran angeordneten Verriegelungsrahmen, vor Ansetzen des Inletteils an ein Gehäuseteil des Steckverbinderteils;
- Fig. 4: eine Ansicht des Inletteils bei Ansetzen an ein zugeordnetes Gehäuseteil;
- Fig. 5: eine Ansicht des Inletteils in einer an das Gehäuseteil angesetzten Stellung, nach Betätigen des Verriegelungsrahmens zum Überführen des Verriegelungsrahmens aus einer ersten Montagestellung in eine zweite Montagestellung;
- Fig. 6: eine Draufsicht auf das Steckverbinderteil;
- Fig. 7A: eine Schnittansicht entlang der Linie A-A gemäß Fig. 6, vor Betätigen des Verriegelungsrahmens zum Überführen des Verriegelungsrahmens aus einer ersten Montagestellung in eine zweite Montagestellung;
- Fig. 7B: eine vergrößerte Ansicht in einem Ausschnitt B gemäß Fig. 7A;
- Fig. 7C: eine vergrößerte Ansicht in einem Ausschnitt C gemäß Fig. 7A;
- Fig. 8A: eine Schnittansicht entlang der Linie D-D gemäß Fig. 6, nach Betätigen des Verriegelungsrahmens zum Überführen des Verriegelungsrahmens aus einer ersten Montagestellung in eine zweite Montagestellung; und
- Fig. 8B: eine vergrößerte Ansicht in einem Ausschnitt E gemäß Fig. 8A.

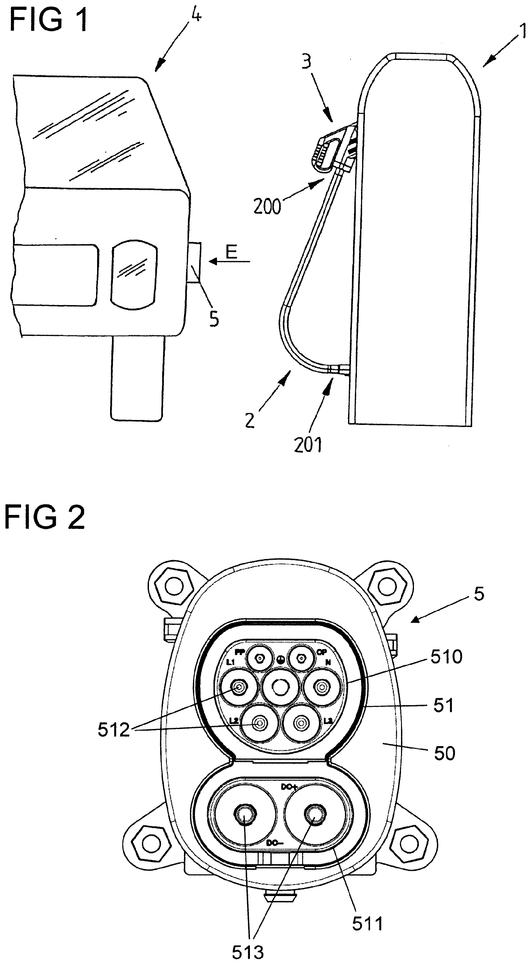

Fig. 1 zeigt eine Ladestation 1, die zum Aufladen eines elektrisch angetriebenen Fahrzeugs 4, auch bezeichnet als Elektrofahrzeug, dient. Die Ladestation 1 ist dazu ausgestaltet, einen Ladestrom in Form eines Wechselstroms oder eines Gleichstroms zur Verfügung zu stellen und weist ein Kabel 2 auf, das mit einem Ende 201 mit der Ladestation 1 und mit einem anderen Ende 200 mit einem Gegensteckverbinderteil 3 in Form eines Ladesteckers verbunden ist.

Das Gegensteckverbinderteil 3 kann steckend mit einem zugeordneten Steckverbinderteil 5 in Form einer Ladebuchse an dem Fahrzeug 4 in Eingriff gebracht werden. Auf diese Weise kann die Ladestation 1 elektrisch mit dem Fahrzeug 4 verbunden werden, um Ladeströme von der Ladestation 1 hin zu dem Fahrzeug 4 zu übertragen.

Ein Ausführungsbeispiel eines Steckverbinderteils 5 in Form einer zum Beispiel an einem Fahrzeug 4 anzuordnenden Ladebuchse zeigt Fig. 2. Das Steckverbinderteil 5 in Form der Ladebuchse weist ein Gehäuseteil 50 auf, an dem ein Inletteil 51 zur Ausbildung eines Steckgesichtes angeordnet ist. Das Inletteil 51 bildet Steckabschnitte 510, 511 aus, die entlang einer Steckrichtung E (siehe Fig. 1) steckend mit einem zugeordneten Gegensteckverbinderteil 3 verbunden werden können, um elektrische Kontakte 512, 513 an den Steckabschnitten 510, 511 elektrisch mit dem Gegensteckverbinderteil 3 zu kontaktieren und darüber eine elektrische Verbindung zwischen der Ladestation 1 und dem Fahrzeug 4 herzustellen.

Bei dem dargestellten Ausführungsbeispiel sind an einem oberen, ersten Steckabschnitt 510 elektrische Kontaktelemente 512 angeordnet, die insbesondere zum Übertragen eines Ladestroms in Form eines (gegebenenfalls mehrphasigen) Wechselstroms dienen können. An einem unteren, zweiten Steckabschnitt 511 sind demgegenüber Kontaktelemente 513 angeordnet, über die ein Ladestrom in Form eines Gleichstroms hin zu dem Fahrzeug 4 übertragen werden kann. Zusätzlich zu Lastkontakten zum Übertragen eines Ladestroms können an den Steckabschnitten 510, 511 Signalkontakte zum Übertragen von Steuersignalen vorgesehen sein.

Bei einem Steckverbinderteil 5 in Form einer an einem Fahrzeug 4 anzuordnenden Ladebuchse, wie sie beispielhaft in Fig. 2 dargestellt ist, ist das Gehäuseteil 50 üblicherweise für unterschiedliche Fahrzeuge in seiner Gestalt variabel. Das durch das Inletteil 51 bereitgestellte Steckgesicht ist demgegenüber genormt, sodass das Steckverbinderteil 5 mit einem entsprechend genormten, komplementären Ladestecker 3 zum Aufladen des Fahrzeugs 4 in Eingriff gebracht werden kann.

Um das Steckverbinderteil 5 zu montieren, muss das Inletteil 51 an dem Gehäuseteil 50 befestigt werden, wobei wünschenswert ist, eine vordefinierte Schnittstelle zur Verbindung zu verwenden, sodass für das Inletteil 51 ein Gleichteil verwendet werden kann, das mit unterschiedlich gestalteten Gehäuseteilen 50 verbunden werden kann. Dies ermöglicht, ein einheitliches Inletteil 51 an ganz unterschiedlichen Gehäuseteilen 50 zu verwenden, was die Teilevielfalt reduziert und zudem den Aufwand und die Kosten bei Konzipierung eines Steckverbinderteils 5 verringert, weil Anpassungen an dem Inletteil 51 nicht mehr erforderlich sind.

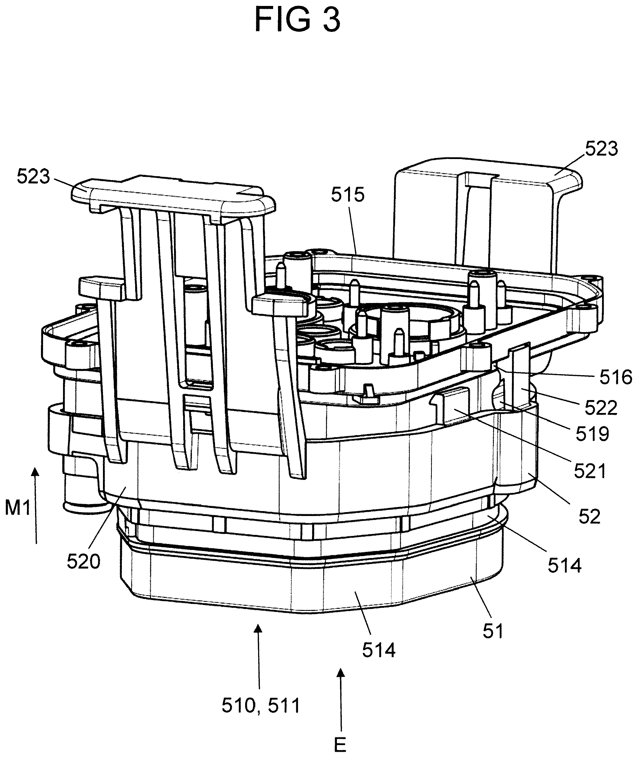

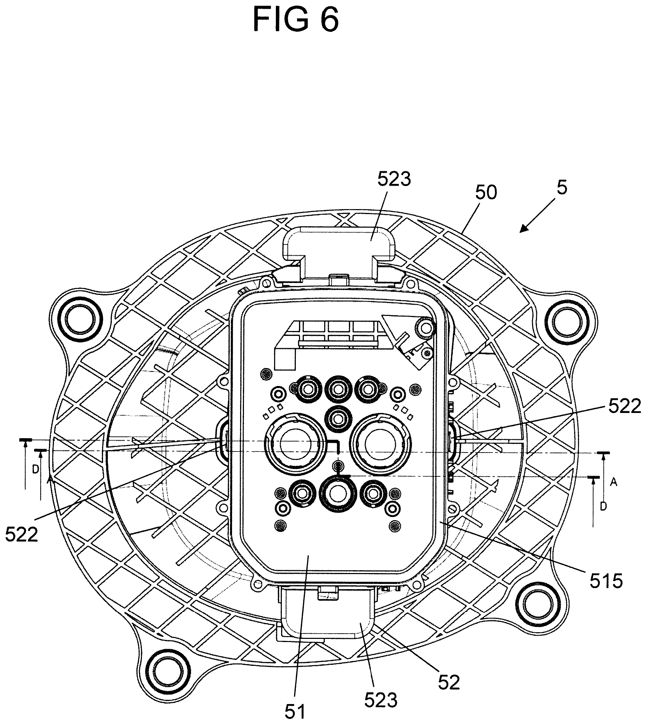

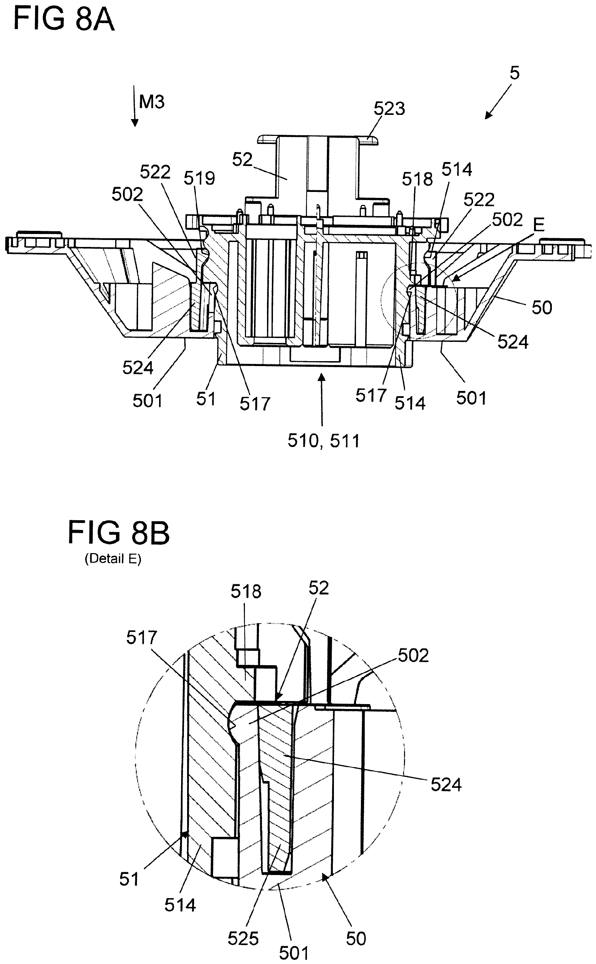

Um das Inletteil 51 mit einem Gehäuseteil 50 zu verbinden, ist bei dem in Fig. 3 bis 8A, 8B in unterschiedlichen Zuständen bei der Montage dargestellten Ausführungsbeispiel ein Verriegelungsrahmen 52 vorgesehen, der dazu dient, eine formschlüssige Verbindung zwischen dem Inletteil 51 und dem Gehäuseteil 50 zu sichern.

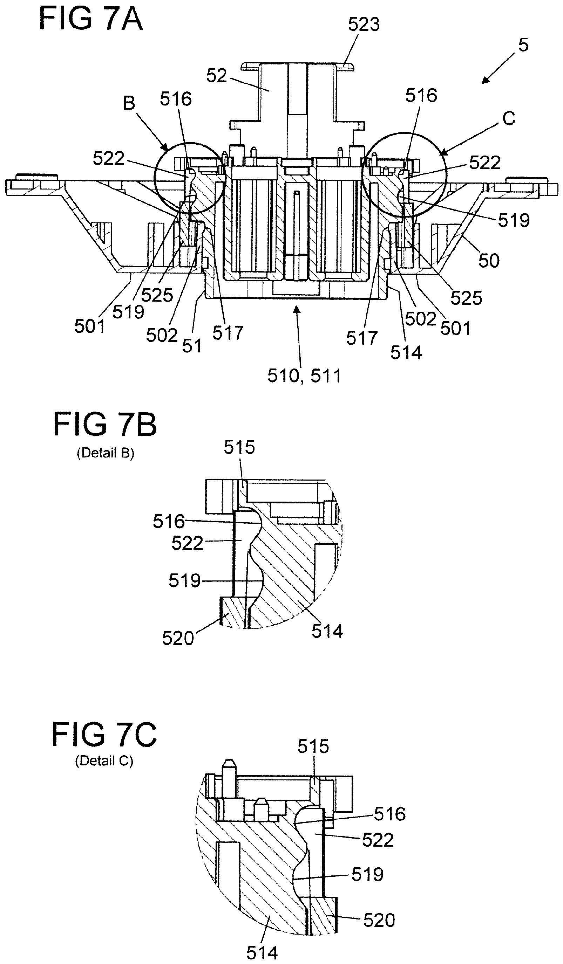

Zur Montage des Steckverbinderteils 5 wird der Verriegelungsrahmen 52 in einem ersten Arbeitsschritt, dargestellt in Fig. 3, in eine erste Montagerichtung M1 an das Inletteil 51 angesetzt. Der Verriegelungsrahmen 52 weist ein Körperelement 520 auf, das in an das Inletteil 51 angesetzter Stellung des Verriegelungsrahmens 52 sich um ein Inletgehäuse 514 des Inletteils 51 umfänglich herum erstreckt und das Inletgehäuse 514 somit außen umgreift. An dem Körperelement 520 sind Rastelemente 522 in Form von entlang der ersten Montagerichtung M1 von dem Körperelement 520 vorstehenden Rastfingern angeordnet, die in einer in Fig. 3 dargestellten ersten Montagestellung des Verriegelungsrahmens 52 formschlüssig mit Rasteingriffen 516 beidseitig im Bereich eines Gehäuseabschnitts 515 in Form eines umlaufenden Rands an dem Inletgehäuse 514 in Eingriff stehen (siehe hierzu Fig. 3 auch in Zusammenschau mit Fig. 7A-7C).

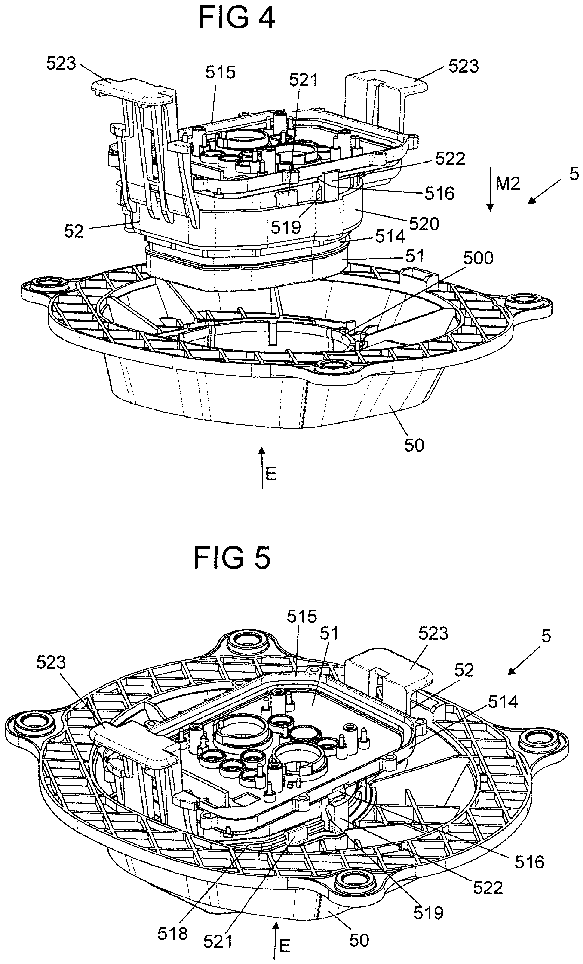

Mit dem Verriegelungsrahmen 52 in der ersten Montagestellung kann das Inletteil 51, wie dies im Übergang von Fig. 4 hin zu Fig. 5 dargestellt ist, in einem nächsten Arbeitsschritt an das Gehäuseteil 50 angesetzt werden, indem das Inletteil 51 mit seinem Inletgehäuse 514 in eine Aufnahmeöffnung 500 an dem Gehäuseteil 50 eingesetzt wird. Dies erfolgt in eine der ersten Montagerichtung M1 entgegengesetzte, zweite Montagerichtung M2 bei an dem Inletteil 51 über die Rastelemente 522 formschlüssig gehaltenem Verriegelungsrahmen 52.

Bei Einsetzen des Inletteils 51 in die Aufnahmeöffnung 500 des Gehäuseteils 50 gelangen von einem Bodenabschnitt 501 des Gehäuseteils 50 vorstehende Rastelemente 502 in formschlüssigen Eingriff mit Rasteinrichtungen 517 in Form von Ausnehmungen außenseitig an dem Inletgehäuse 514, wie dies aus der Schnittansicht gemäß Fig. 7A ersichtlich ist. Das Inletteil 51 wird somit über die Rastelemente 502 des Gehäuseteils 50 formschlüssig mit dem Gehäuseteil 50 verbunden, wobei die Rastelemente 502 bei Einsetzen des Inletteils 51 durch Zusammenwirken mit dem Inletgehäuse 514 elastisch nach außen ausgelenkt werden, bis sie elastisch in Eingriff mit den Rasteinrichtungen 517 in Form der Ausnehmungen beidseitig des Inletgehäuses 514 schnappen, wie dies aus Fig. 7A ersichtlich ist.

Bei Ansetzen des Inletteils 51 an das Gehäuseteil 50 befindet sich der Verriegelungsrahmen 52 in der ersten Montagestellung, in der der Verriegelungsrahmen 52 über seine Rastelemente 522 durch Eingriff in die Rasteingriffe 516 im Bereich des oberen Gehäuseabschnitt 515 formschlüssig an dem Inletteil 51 gehalten ist. In dieser ersten Montagestellung befindet sich ein unterer Randabschnitt 525 des Körperelements 520 des Verriegelungsrahmens 52 im Bereich der Rasteinrichtungen 517 des Inletgehäuses 514 und weist einen solchen lichten Abstand zu den Rasteinrichtungen 517 auf, dass bei Ansetzen des Inletteils 51 an das Gehäuseteil 50 die Rastelemente 502 des Gehäuseteils 50 elastisch nach außen ausgelenkt und in Eingriff mit den Rasteinrichtung 517 gebracht werden können.

Ist das Inletteil 51 an das Gehäuseteil 50 angesetzt worden, kann ein Monteur über Betätigungselemente 523 in Form von von dem Körperelement 520 vorstehenden Flanschabschnitten auf den Verriegelungsrahmen 52 drücken, um den Verriegelungsrahmen 52 in eine (der ersten Montagerichtung M1 entgegengesetzte) Montagerichtung M3 aus der ersten Montagestellung in eine zweite Montagestellung zu bewegen, wie sie in 8A und 8B dargestellt ist.

In der zweiten Montagestellung stehen die Rastelemente 522 des Verriegelungsrahmens 52 mit Rasteingriffen 519 am Inletgehäuse 514 in Eingriff, sodass wiederum der Verriegelungsrahmen 52 mit dem Inletteil 51 verrastet und somit in seiner zweiten Montagestellung arretiert ist.

Der Eingriff der Rastelemente 522 mit den Rasteingriffen 516 in der ersten Montagestellung und mit den Rasteingriffen 519 in der zweiten Montagestellung ist derart, dass durch hinreichende Kraftwirkung auf den Verriegelungsrahmen 52 der Verriegelungsrahmen 52 gegenüber dem Inletteil 51 bewegt werden kann. Insofern kann bei hinreichender Kraftwirkung der Verriegelungsrahmen 52 aus seiner ersten Montagestellung in die zweite Montagestellung bewegt werden, und umgekehrt kann der Verriegelungsrahmen 52 aus der zweiten Montagestellung auch zurück in die erste Montagestellung verstellt werden, um gegebenenfalls das Inletteil 51 wieder von dem Gehäuseteil 50 zu lösen.

Bei Überführen des Verriegelungsrahmens 52 aus der ersten Montagestellung in die zweite Montagestellung wird der Verriegelungsrahmen 52 mit von dem Körperelement 520 vorstehenden Anschlagelementen 521 einer durch einen umlaufenden Bund des Inletgehäuses 514 gebildeten Anschlagkontur 518 angenähert derart, dass in der zweiten Montagestellung die Anschlagelemente 521 an der Anschlagkontur 518 anliegen. Der Verriegelungsrahmen 52 kann somit nicht über die zweite Montagestellung hinaus in die Montagerichtung M3 zu dem Inletteil 51 bewegt werden, sodass die Anschlagelemente 521 zusammen mit der Anschlagkontur 518 die zweite Montagestellung definieren.

In der zweiten Montagestellung kommt das Körperelement 520 des Verriegelungsrahmens 52 mit einem umlaufenden, gegenüber dem Randabschnitt 525 nach innen vorspringenden Verriegelungsabschnitt 524 rückseitig der Rastelemente 502 des Gehäuseteils 50 zu liegen, wie dies aus Fig. 8A und der vergrößerten Ansicht gemäß Fig. 8B ersichtlich ist, sodass eine elastische Auslenkung der Rastelemente 502 relativ zum Inletteil 51 nach außen durch den Verriegelungsrahmen 52 gesperrt ist. Die formschlüssige Verbindung zwischen dem Inletteil 51 und dem Gehäuseteil 50 ist somit gesichert.

Weil die formschlüssige Verbindung des Inletteils 51 mit dem Gehäuseteil 50 über den Eingriff der Rastelemente 502 in die jeweils zugeordnete Rasteinrichtung 517 mittels des Verriegelungsrahmens 52 gesichert ist, ist das Inletteil 51 fest und zuverlässig mit dem Gehäuseteil 50 verbunden und kann insbesondere nicht ohne weiteres, jedenfalls nicht ohne Lösen des Verriegelungsrahmens 52, von dem Gehäuseteil 50 gelöst werden.

Die Verbindung des Inletteils 51 mit dem Gehäuseteil 50 kann hierbei in standardisierter Weise in einem standardisierten Montageprozess erfolgen und ist insbesondere unabhängig von der konkreten Gestaltung des Gehäuseteils 50, sodass eine einheitliche Schnittstelle zum Verbinden eines einheitlichen Inletteils 51 mit ganz unterschiedlich gestalteten Gehäuseteilen 50 geschaffen werden kann.

Ist das Inletteil 51 an dem Gehäuseteil 50 befestigt, kann die so geschaffene Baugruppe an dem Fahrzeug 4, insbesondere einem Fahrzeugkarosserieabschnitt, montiert werden, sodass das Steckverbinderteil 5 an dem Fahrzeug 4 festgelegt wird.

Kontaktelemente 512, 513 können vor Montage des Inletteils 51 an dem Gehäuseteil 50 an den Steckabschnitten 510, 511 des Inletteils 51 angeordnet werden. Denkbar ist jedoch auch, die Kontaktelemente 512, 513 erst nach Montage des Inletteils 51 an dem Gehäuseteil 50 an den Steckabschnitten 510, 511 anzuordnen. Zusätzlich kann vor oder nach der Montage des Inletteils 51 an dem Gehäuseteil 50 eine elektrische Leitung an das Inletteil 51 zur elektrischen Kontaktierung der Kontaktelemente 512, 513 angeschlossen werden.

Soll das Inletteil 51 von dem Gehäuseteil 50 gelöst werden, so wird zunächst der Verriegelungsrahmen 52 entgegen der Montagerichtung M3 (siehe Fig. 8) zu dem Inletteil 51 verstellt, sodass die Rastelemente 522 außer Eingriff von den Rasteingriffen 519 und in Eingriff mit den darüber angeordneten Rasteingriffen 516 beidseits des Inletgehäuses 514 des Inletteils 51 gelangen. Der Verriegelungsrahmen 51 gelangt somit in die in Fig. 7A dargestellte Stellung zu dem Inletteil 51 und dem Gehäuseteil 50, in der die Rastelemente 502 des Gehäuseteils 50 nicht mehr durch den Verriegelungsabschnitt 524 des Verriegelungsrahmens 52 gesperrt sind, sodass das Inletteil 51 unter Aufhebung des Formschlusses zwischen den Rastelementen 502 und den zugeordneten Rasteinrichtungen 517 entgegen der Montagerichtung M2 aus der Öffnung 500 des Gehäuseteils 50 entnommen werden kann (entsprechend dem Übergang von Fig. 5 hin zu Fig. 4).

Der der Erfindung zugrunde liegende Gedanke ist nicht auf die vorangehend geschilderten Ausführungsbeispiele beschränkt, sondern lässt sich auch in gänzlich andersgearteter Weise verwirklichen.

Ein Steckverbinderteil der beschriebenen Art kann eine Ladebuchse an einem Elektrofahrzeug verwirklichen, kann aber auch zum Beispiel einen über ein Ladekabel mit einer Ladestation verbundenen Ladestecker ausbilden.

Darüber hinaus kann ein solches Steckverbinderteil auch unabhängig von einem Ladesystem zum Aufladen eines Elektrofahrzeugs zum Einsatz kommen.

Über ein solches Steckverbinderteil können Lastströme in Form eines Gleichstroms oder in Form eines Wechselstroms übertragen werden.

Inletteil und Gehäuseteil des Steckverbinderteils können ganz unterschiedlich ausgestaltet sein. Insofern sind das Inletteil und das Gehäuseteil insbesondere nicht auf die konkret dargestellten Ausgestaltungen beschränkt.

### Bezugszeichenliste

- 1: Ladestation
- 2: Ladekabel
- 200,201: Ende
- 3: Gegensteckverbinderteil (Ladestecker)
- 4: Fahrzeug
- 5: Steckverbinderteil (Ladebuchse)
- 50: Gehäuseteil
- 500: Aufnahmeöffnung
- 501: Bodenabschnitt
- 502: Rastelement
- 51: Inletteil
- 510, 511: Steckabschnitt
- 512, 513: Kontaktelement
- 514: Inletgehäuse
- 515: Gehäuseabschnitt
- 516: Rasteingriff
- 517: Rasteinrichtung
- 518: Anschlagkontur
- 519: Rasteingriff
- 52: Verriegelungsrahmen
- 520: Körperelement
- 521: Anschlagelement
- 522: Rastelement
- 523: Betätigungselement
- 524: Verriegelungsabschnitt
- 525: Randabschnitt
- E: Einsteckrichtung
- M1, M2, M3: Montagerichtung

## Patentansprüche

1. Steckverbinderteil (5) zum Verbinden mit einem Gegensteckverbinderteil (3), mit einem Gehäuseteil (50), mit einem mit dem Gehäuseteil (50) zu verbindenden Inletteil (51), das einen Steckabschnitt (510, 511) aufweist, an dem zumindest ein Kontaktelement (512, 513) zum steckenden Verbinden mit dem Gegensteckverbinderteil (3) anordbar ist, und mit einem Verriegelungsrahmen (52), der zumindest ein erstes Rastelement (522) aufweist, wobei der Verriegelungsrahmen (52) in einer ersten Montagestellung über das zumindest eine erste Rastelement (522) mit dem Inletteil (51) verrastet ist, um das Inletteil (51) zusammen mit dem Verriegelungsrahmen (52) an das Gehäuseteil (50) anzusetzen, wobei das Inletteil (51) in einer an das Gehäuseteil (50) angesetzten Stellung über zumindest ein zweites Rastelement (502) formschlüssig mit dem Gehäuseteil (50) verbunden ist, wobei der Verriegelungsrahmen (52) aus der ersten Montagestellung relativ zu dem Inletteil (51) in eine zweite Montagestellung bewegbar ist, **dadurch gekennzeichnet, dass** der in die zweite Montagestellung bewegte Vierregelungsrahmen (52) in der an das Gehäuseteil (50) angesetzten Stellung des Inletteils (51) derart auf das zumindest eine zweite Rastelement (502) einwirkt, dass die formschlüssige Verbindung zwischen dem Inletteil (51) und dem Gehäuseteil (50) in der zweiten Montagestellung des Verriegelungsrahmens (52) gegen ein Lösen gesichert ist.

2. Steckverbinderteil (5) nach Anspruch 1, **dadurch gekennzeichnet, dass** das zumindest eine zweite Rastelement (502), bei Ansetzen des Inletteils (51) zusammen mit dem Verriegelungsrahmen (52) an das Gehäuseteil (50), elastisch auslenkbar ist, um die formschlüssige Verbindung zwischen dem Inletteil (51) und dem Gehäuseteil (50) herzustellen.

3. Steckverbinderteil (5) nach Anspruch 1 oder 2, **dadurch gekennzeichnet, dass** der Verriegelungsrahmen (52) ein Körperelement (520) aufweist, an dem das zumindest eine erste Rastelement (522) angeordnet ist und das sich zumindest abschnittsweise umfänglich um das Inletteil (51) erstreckt.

4. Steckverbinderteil (5) nach Anspruch 3, **dadurch gekennzeichnet, dass** das Körperelement (520) ausgebildet ist, in der zweiten Montagestellung des Verriegelungsrahmens (52) auf das zumindest eine zweite Rastelement (502) einzuwirken, um die formschlüssige Verbindung zwischen dem Inletteil (51) und dem Gehäuseteil (50) zu sichern.

5. Steckverbinderteil (5) nach einem der vorangehenden Ansprüche, **dadurch gekennzeichnet, dass** das zumindest eine zweite Rastelement (502) an dem Gehäuseteil (50) angeordnet und ausgebildet ist, in der an das Gehäuseteil (50) angesetzten Stellung des Inletteils (51) einen Formschluss mit einer Rasteinrichtung (517) des Inletteils (51) herzustellen.

6. Steckverbinderteil (5) nach Anspruch 5, **dadurch gekennzeichnet, dass** der Verriegelungsrahmen (52) in der zweiten Montagestellung derart auf das zumindest eine zweite Rastelement (502) einwirkt, dass der Formschluss zwischen dem zumindest einen zweiten Rastelement (502) und der Rasteinrichtung (517) nicht lösbar ist.

7. Steckverbinderteil (5) nach einem der vorangehenden Ansprüche, **dadurch gekennzeichnet, dass** der Verriegelungsrahmen (52) in eine erste Montagerichtung (M1) an das Inletteil (51) ansetzbar ist, um den Verriegelungsrahmen (52) in der ersten Montagestellung mit dem Inletteil (51) zu verrasten.

8. Steckverbinderteil (5) nach Anspruch 7, **dadurch gekennzeichnet, dass** der Verriegelungsrahmen (52) aus der ersten Montagestellung in eine der ersten Montagerichtung (M1) entgegen gesetzte, zweite Montagerichtung (M2) relativ zu dem Inletteil (51) bewegbar ist, um den Verriegelungsrahmen (52) in die zweite Montagestellung zu überführen.

9. Steckverbinderteil (5) nach einem der vorangehenden Ansprüche, **dadurch gekennzeichnet, dass** der Verriegelungsrahmen (52) zumindest ein Anschlagelement (521) und das Inletteil (51) eine Anschlagkontur (518) aufweisen, wobei das zumindest eine Anschlagelement (521) des Verriegelungsrahmens (52) in der zweiten Montagestellung an der Anschlagkontur (518) des Inletteils (51) derart anliegt, dass der Verriegelungsrahmen (52) bei Überführen in die zweite Montagestellung nicht über die zweite Montagestellung hinaus zu dem Inletteil (51) bewegbar ist.

10. Steckverbinderteil (5) nach einem der vorangehenden Ansprüche, **dadurch gekennzeichnet, dass** das zumindest eine erste Rastelement (522) in der ersten Montagestellung rastend mit einem ersten Rasteingriff (516) des Inletteils (51) und in der zweiten Montagestellung rastend mit einem zweiten Rasteingriff (519) des Inletteils (51) in Eingriff steht.

11. Steckverbinderteil (5) nach einem der vorangehenden Ansprüche, **dadurch gekennzeichnet, dass** das Gehäuseteil (50) eine Aufnahmeöffnung (500) aufweist, in die das Inletteil (51) zum Verbinden mit dem Gehäuseteil (50) einzusetzen ist.

12. Steckverbinderteil (5) nach Anspruch 11, **dadurch gekennzeichnet, dass** das Inletteil (51) an einer ersten Seite des Gehäuseteils (50) in die Aufnahmeöffnung (500) einzusetzen ist derart, dass der Steckabschnitt (510, 511) an einer zweiten Seite des Gehäuseteils (50) steckend mit einem zugeordneten Gegensteckverbinderteil (3) verbindbar ist.

13. Ladesystem zum Aufladen eines Elektrofahrzeugs (4), mit einem Steckverbinderteil (5) nach einem der vorangehenden Ansprüche.

14. Verfahren zum Montieren eines Steckverbinderteils (5) zum Verbinden mit einem Gegensteckverbinderteil (3), bei dem ein Inletteil (51), das einen Steckanschnitt (510, 511) aufweist, an dem zumindest ein Kontaktelement (512, 513) zum steckenden Verbinden mit dem Gegensteckverbinderteil (3) anordbar ist, mit einem Gehäuseteil (50) verbunden wird, wobei das Inletteil (51) zusammen mit einem Verriegelungsrahmen (52), der zumindest ein erstes Rastelement (522) aufweist und in einer ersten Montagestellung über das zumindest eine erste Rastelement (522) mit dem Inletteil (51) verrastet ist, an das Gehäuseteil (51) angesetzt wird derart, dass das Inletteil (51) in einer an das Gehäuseteil (50) angesetzten Stellung über zumindest ein zweites Rastelement (502) formschlüssig mit dem Gehäuseteil (50) verbunden ist, und der Verriegelungsrahmen (52) sodann aus der ersten Montagestellung relativ zu dem Inletteil (51) in eine zweite Montagestellung bewegt wird, **dadurch gekennzeichnet, dass** somit der Verriegelungsrahmen (52) in der an das Gehäuseteil (50) angesetzten Stellung des Inletteils (51) derart auf das zumindest eine zweite Rastelement (502) einwirkt, dass die formschlüssige Verbindung zwischen dem Inletteil (51) und dem Gehäuseteil (50) in der zweiten Montagestellung des Verriegelungsrahmens (52) gegen ein Lösen gesichert ist.

## Claims

1. Plug connector part (5) for connection to a mating plug connector part (3), having a housing part (50), having an inlet part (51) which is to be connected to the housing part (50) and which has a plug portion (510, 511) on which there can be arranged at least one contact element (512, 513) for plug connection with the mating plug connector part (3), and having a locking frame (52) which has at least one first latching element (522), wherein, in a first mounting position, the locking frame (52) is latched with the inlet part (51) via the at least one first latching element (522) in order to fit the inlet part (51) together with the locking frame (52) onto the housing part (50), wherein the inlet part (51), in a position in which it is fitted onto the housing part (50), is connected to the housing part (50) in a form-fitting manner via at least one second latching element (502), wherein the locking frame (52) can be moved from the first mounting position relative to the inlet part (51) to a second mounting position, **characterized in that**, in the position in which the inlet part (51) is fitted onto the housing part (50), the locking frame (52) moved into the second mounting position acts on the at least one second latching element (502) in such a way that the form-fitting connection between the inlet part (51) and the housing part (50) in the second mounting position of the locking frame (52) is secured against release.

2. Plug connector part (5) according to Claim 1, **characterized in that**, when fitting the inlet part (51) together with the locking frame (52) onto the housing part (50), the at least one second latching element (502) can be elastically deflected in order to produce the form-fitting connection between the inlet part (51) and the housing part (50).

3. Plug connector part (5) according to Claim 1 or 2, **characterized in that** the locking frame (52) has a body element (520) on which the at least one first latching element (522) is arranged and which extends circumferentially around the inlet part (51) at least in certain portions.

4. Plug connector part (5) according to Claim 3, **characterized in that** the body element (520) is designed, in the second mounting position of the locking frame (52), to act on the at least one second latching element (502) in order to secure the form-fitting connection between the inlet part (51) and the housing part (50).

5. Plug connector part (5) according to one of the preceding claims, **characterized in that** the at least one second latching element (502) is arranged on the housing part (50) and designed, in the position of the inlet part (51) in which it is fitted onto the housing part (50), to produce a form-fitting engagement with a latching device (517) of the inlet part (51).

6. Plug connector part (5) according to Claim 5, **characterized in that**, in the second mounting position, the locking frame (52) acts on the at least one second latching element (502) in such a way that the form-fitting engagement between the at least one second latching element (502) and the latching device (517) is non-releasable.

7. Plug connector part (5) according to one of the preceding claims, **characterized in that** the locking frame (52) can be fitted onto the inlet part (51) in a first mounting direction (M1) in order to latch the locking frame (52) with the inlet part (51) in the first mounting position.

8. Plug connector part (5) according to Claim 7, **characterized in that** the locking frame (52) can be moved from the first mounting position in a second mounting direction (M2), opposite to the first mounding direction (M1), relative to the inlet part (51) in order to transfer the locking frame (52) into the second mounting position.

9. Plug connector part (5) according to one of the preceding claims, **characterized in that** the locking frame (52) has at least one stop element (521) and the inlet part (51) has a stop contour (518), wherein, in the second mounting position, the at least one stop element (521) of the locking frame (52) butts against the stop contour (518) of the inlet part (51) in such a way that, when being transferred into the second mounting position, the locking frame (52) cannot be moved beyond the second mounting position towards the inlet part (51).

10. Plug connector part (5) according to one of the preceding claims, **characterized in that**, in the first mounting position, the at least one first latching element (522) is in latching engagement with a first latching engager (516) of the inlet part (51) and, in the second mounting position, is in latching engagement with a second latching engager (519) of the inlet part (51).

11. Plug connector part (5) according to one of the preceding claims, **characterized in that** the housing part (50) has a receiving opening (500) into which the inlet part (51) is to be inserted for connection to the housing part (50).

12. Plug connector part (5) according to Claim 11, **characterized in that** the inlet part (51) is to be inserted into the receiving opening (500) on a first side of the housing part (50) in such a way that the plug portion (510, 511) can be plug-connected to an associated mating plug connector part (3) on a second side of the housing part (50).

13. Charging system for charging an electric vehicle (4), having a plug connector part (5) according to one of the preceding claims.

14. Method for mounting a plug connector part (5) for connection to a mating plug connector part (3), in which method an inlet part (51), which has a plug portion (510, 511) on which there can be arranged at least one contact element (512, 513) for plug connection with the mating plug connector part (3), is connected to a housing part (50), wherein the inlet part (51), together with a locking frame (52) which has at least one first latching element (522) and is latched in a first mounting position with the inlet part (51) via the at least one first latching element (522), is fitted onto the housing part (51) in such a way that the inlet part (51), in a position in which it is fitted onto the housing part (50), is connected to the housing part (50) in a form-fitting manner via at least one second latching element (502), and the locking frame (52) is then moved from the first mounting position relative to the inlet part (51) into a second mounting position, **characterized in that**, in the position of the inlet part (51) in which it is fitted onto the housing part (50), the locking frame (52) thus acts on the at least one second latching element (502) in such a way that the form-fitting connection between the inlet part (51) and the housing part (50) in the second mounting position of the locking frame (52) is secured against release.

## Revendications

1. Pièce de connecteur enfichable (5) à relier à une pièce de connecteur enfichable complémentaire (3), comprenant une pièce de boîtier (50), comprenant une pièce d'entrée (51) à relier à la pièce de boîtier (50) et qui présente une partie enfichable (510, 511) sur laquelle peut être disposé au moins un élément de contact (512, 513) pour une liaison par enfichage à la pièce de connecteur enfichable complémentaire (3), et comprenant un cadre de verrouillage (52) qui présente au moins un premier élément d'enclenchement (522), dans laquelle, dans une première position de montage, le cadre de verrouillage (52) est enclenché dans la pièce d'entrée (51) par l'intermédiaire dudit au moins un premier élément d'enclenchement (522) afin de rapporter la pièce d'entrée (51) avec le cadre de verrouillage (52) à la pièce de boîtier (50), dans laquelle, dans une position rapportée à la pièce de boîtier (50), la pièce d'entrée (51) est reliée par complémentarité de forme à la pièce de boîtier (50) par l'intermédiaire d'au moins un deuxième élément d'enclenchement (502), le cadre de verrouillage (52) pouvant être déplacé par rapport à la pièce d'entrée (51) de la première position de montage vers une deuxième position de montage,
**caractérisée en ce que**, dans la position rapportée à la pièce de boîtier (50) de la pièce d'entrée (51), le cadre de verrouillage (52) déplacé dans la deuxième position de montage agit sur ledit au moins un deuxième élément d'enclenchement (502) de telle sorte qu'une liaison par complémentarité de forme entre la pièce d'entrée (51) et la pièce de boîtier (50) du cadre de verrouillage (52) est protégée contre le desserrage dans la deuxième position de montage.

2. Pièce de connecteur enfichable (5) selon la revendication 1, **caractérisée en ce que** ledit au moins un deuxième élément d'enclenchement (502), lorsque la pièce d'entrée (51) avec le cadre de verrouillage (52) est rapportée à la pièce de boîtier (50), est déformable élastiquement afin d'établir la liaison par complémentarité de forme entre la pièce d'entrée (51) et la pièce de boîtier (50).

3. Pièce de connecteur enfichable (5) selon la revendication 1 ou 2, **caractérisée en ce que** le cadre de verrouillage (52) présente un élément de corps (520) sur lequel est disposé ledit au moins un premier élément d'enclenchement (522) et qui s'étend au moins par endroits en circonférence autour de la pièce d'entrée (51).

4. Pièce de connecteur enfichable (5) selon la revendication 3, **caractérisée en ce que** l'élément de corps (520) est réalisé pour agir sur ledit au moins un deuxième élément d'enclenchement (502) dans la deuxième position de montage du cadre de verrouillage (52) afin de protéger la liaison par complémentarité de forme entre la pièce d'entrée (51) et la pièce de boîtier (50) .

5. Pièce de connecteur enfichable (5) selon l'une quelconque des revendications précédentes, **caractérisée en ce que** ledit au moins un deuxième élément d'enclenchement (502) est disposé sur la pièce de boîtier (50) et est réalisé pour établir une complémentarité de forme avec un dispositif d'enclenchement (517) de la pièce d'entrée (51) dans la position rapportée à la pièce de boîtier (50) de la pièce d'entrée (51).

6. Pièce de connecteur enfichable (5) selon la revendication 5, **caractérisée en ce que** dans la deuxième position de montage, le cadre de verrouillage (52) agit sur ledit au moins un deuxième élément d'enclenchement (502) de telle sorte que la complémentarité de forme entre ledit au moins un deuxième élément d'enclenchement (502) et le dispositif d'enclenchement (517) n'est pas amovible.

7. Pièce de connecteur enfichable (5) selon l'une quelconque des revendications précédentes, **caractérisée en ce que** le cadre de verrouillage (52) peut être rapporté à la pièce d'entrée (51) dans une première direction de montage (M1) pour enclencher le cadre de verrouillage (52) avec la pièce d'entrée (51) dans la première position de montage.

8. Pièce de connecteur enfichable (5) selon la revendication 7, **caractérisée en ce que** le cadre de verrouillage (52) peut être déplacé par rapport à la pièce d'entrée (51) en partant de la première position de montage dans une deuxième direction de montage (M2) opposée à la première direction de montage (M1) pour faire passer le cadre de verrouillage (52) dans la deuxième position de montage.

9. Pièce de connecteur enfichable (5) selon l'une quelconque des revendications précédentes, **caractérisée en ce que** le cadre de verrouillage (52) présente au moins un élément de butée (521), et la pièce d'entrée (51) présente un contour de butée (518), dans laquelle, dans la deuxième position de montage, ledit au moins un élément de butée (521) du cadre de verrouillage (52) est adjacent au contour de butée (518) de la pièce d'entrée (51) de telle sorte que le cadre de verrouillage (52) ne peut pas être déplacé au-delà de la deuxième position de montage jusqu'à la pièce d'entrée (51) lors du passage à la deuxième position de montage.

10. Pièce de connecteur enfichable (5) selon l'une quelconque des revendications précédentes, **caractérisée en ce que** dans la première position de montage, ledit au moins un premier élément d'enclenchement (522) est en prise par enclenchement avec un premier dispositif de mise en prise par enclenchement (516) de la pièce d'entrée (51), et dans la deuxième position de montage, il est en prise par enclenchement avec un deuxième dispositif de mise en prise par enclenchement (519) de la pièce d'entrée (51).

11. Pièce de connecteur enfichable (5) selon l'une quelconque des revendications précédentes, **caractérisée en ce que** la pièce de boîtier (50) présente une ouverture de réception (500) dans laquelle la pièce d'entrée (51) doit être insérée pour être reliée à la pièce de boîtier (50).

12. Pièce de connecteur enfichable (5) selon la revendication 11, **caractérisée en ce que** la pièce d'entrée (51) est destinée à être insérée dans l'ouverture de réception (500) sur un premier côté de la pièce de boîtier (50) de telle sorte que la partie enfichable (510, 511) peut être reliée sur un deuxième côté de la pièce de boîtier (50) par enfichage à une pièce de connecteur enfichable complémentaire (3) associée.

13. Système de charge pour recharger un véhicule électrique (4), comprenant une pièce de connecteur enfichable (5) selon l'une quelconque des revendications précédentes.

14. Procédé de montage d'une pièce de connecteur enfichable (5) destinée à être reliée à une pièce de connecteur enfichable complémentaire (3), dans lequel une pièce d'entrée (51) qui présente une partie enfichable (510, 511) sur laquelle peut être disposé au moins un élément de contact (512, 513) destiné à une liaison par enfichage avec la pièce de connecteur enfichable complémentaire (3) est reliée à une pièce de boîtier (50), dans lequel la pièce d'entrée (51) est enclenchée avec un cadre de verrouillage (52) qui présente au moins un premier élément d'enclenchement (522) et est enclenché par l'intermédiaire dudit au moins un premier élément d'enclenchement (522) avec la pièce d'entrée (51) dans une première position de montage, est rapportée à la pièce de boîtier (51) de telle sorte que la pièce d'entrée (51), dans une position rapportée à la pièce de boîtier (50), est reliée par complémentarité de forme à la pièce de boîtier (50) par l'intermédiaire d'au moins un deuxième élément d'enclenchement (502), et le cadre de verrouillage (52) est ensuite déplacé par rapport à la pièce d'entrée (51) de la première position de montage vers une deuxième position de montage,
**caractérisé en ce qu'**ainsi, dans la position rapportée à la pièce de boîtier (50) de la pièce d'entrée (51), le cadre de verrouillage (52) agit sur ledit au moins un deuxième élément d'enclenchement (502) de telle sorte que la liaison par complémentarité de forme entre la pièce d'entrée (51) et la pièce de boîtier (50) est protégée contre le desserrage dans la deuxième position de montage du cadre de verrouillage (52) .
